# EUROPEAN PATENT SPECIFICATION

(11) **EP 2 628 831 B1**
(45) Date of publication and mention of the grant of the patent: **31.07.2019**
(21) Application number: 13155285.3
(22) Date of filing: 14.02.2013
(51) Int. Cl.: D04B 1/02, D04B 1/26

(54) **Knitted fabric with different pile lengths, knit product and socks using the same**
Gestrick mit verschiedenen Florlängen, Strickprodukt und damit hergestellte Socken
Tricot avec longueurs différentes de poil, produit tricoté et chaussettes obtenues

(30) Priority: 15.02.2012 JP 2012031152
(43) Date of publication of application: 21.08.2013
(73) Proprietor: OKAMOTO CORPORATION, Kitakatsuragi-gun Nara 635-8550 (JP)
(72) Inventor: Fukui, Takao, Nara 635-8550 (JP)
(74) Representative: Zimmermann, Tankred Klaus

(56) References cited:
- EP-A1- 0 757 124
- US-A- 3 477 255
- US-A1- 2003 154 747
- US-B2- 7 677 061

## Description

### BACKGROUND OF THE INVENTION

### 1. Field of the Invention

The present invention relates to knitted fabric including a pile motif drawn and formed by a circular knitting machine (i.e., knitted fabric with different pile lengths) and a knit product and socks (i.e., products with different pile lengths).

### 2. Description of the Related Art

A conventional sock made of pile fabric has a sole portion which is entirely formed by pile stitches. A pile stitch refers to a knitting structure having a longer sinker-loop length of pile yarn than that of ground yarn. The reason why the entire sole portion is formed by the pile stitches is mainly to maintain the foot temperature and to reduce an impact applied to a foot during walking or running. In this case, however, the entire sole portion of the sock becomes thicker and causes difficulty in distributing sweat or humidity from a foot to a shoe, resulting in sweaty feelings. Thus, a sock has been developed which includes pile stitches only in a necessary portion.

United States Patent No. 7,677,061 discloses a sock including three knitting structures, i.e., a knitting structure in which a sinker-loop length of pile yarn is longer than that of ground yarn (hereinafter, referred to as a "low-pile stitch"), another knitting structure in which the sinker-loop length of the pile yarn is longer than that in the low-pile stitch (hereinafter, referred to as a "high-pile stitch"), and a basic knitting structure in which the sinker-loop lengths of the ground yarn and the pile yarn are the same (hereinafter, referred to as a "plain stitch"), for example. Moreover, arranging a float stitch, a tuck stitch, or a cut-boss stitch as a varied knitting structure in place of the plan stitch is also known.

People's preferences have become diversified along with diversification of information and techniques, and therefore highly fashionable knit products are needed as an expression of personality. In order to provide such highly-fashionable knit products, it is necessary for the knit product to have an excellent or beautiful design in the appearance or on the surface of the knit product. The excellent or beautiful design can be obtained by giving a fine three-dimensional appearance to the surface of the knit product, for example. In addition, the knit product is not only used for clothes, but may be required to have additional values in some cases. The additional value can be added by using a fine three-dimensional appearance formed on the surface of the knit product to enhance the functionality, e.g., comfort while being worn, for example. In order to manufacture such knit products while pursuing improved designs and functionality, merely distributing a plurality of different knitting structures, e.g., a basic stitch (or a varied stitch), a high-pile stitch and a low-pile stitch is not sufficient. A knitted fabric with the different knitting structures distributed more finely on a stitch-by-stitch basis is needed.

US 3,477,255 A describes an apparatus for knitting loop fabric including dial needles which are cam-operated. Vertical pattern jacks have more than one yarn-engaging portion to cooperate with the dial needles to form loop pile fabric when body and loop yarns are fed. Each jack has a butt which extends outwards. Pattern wheels move the jack(s) vertically to produce a fabric pattern, and include means which engage the jack butts, and means which control vertical jack movement, so that loops are formed on the radially outer surface of a tubular fabric.

US 2003/154747 A1 describes a circular knitting machine with knitting needles and sinkers for the production of plush fabrics. Each of a plurality of knitting systems has a means for controlling the knitting needles into a knock-over position and pattern devices arranged in front of this means. A first pattern device provided with a ground-thread guide serves for selectively controlling the knitting needles into a knitting or tucking position intended for the pick-up of ground thread or a non-knitting position intended for the non-pick-up of ground thread. A second pattern device provided with a plush-thread guide serves for selectively controlling the knitting needles into a pick-up position intended for the pick-up of plush thread or an intermediate position intended for the non-pick-up of plush thread. A third pattern device serves for selectively controlling the sinkers at least into a first position intended for the formation of shorter plush-thread loops or a second position intended for the formation of longer plush-thread loops.

EP 0 757 124 A1 describes a pile patterning mechanism for a circular knitting machine. A sinker bed is provided with a plurality of radial, horizontal grooves and disposed on the outer circumference of an upper end of a needle cylinder, a plurality of pile sinkers fitted in the radial, horizontal grooves of the sinker bed so as to be slidable and tiltable. A plurality of horizontal pile jacks each having a plurality of butts are fitted in the horizontal grooves of the sinker bed on the radially outer side of the pile sinkers so as to be slidable and tiltable. A control unit is provided for controlling the pile sinkers and the pile jacks to slide and tilt the pile jacks and the pile sinkers. The control unit includes a plurality of sinker cams, a jack selecting device provided with a plurality of actuators, and jack cams. The horizontal arrangement of the pile jacks enables the pile jacks to exert a reliable action on the pile sinker. A knitted article has at least a pile stitch portion of an optional pattern formed by the reciprocating turning operation of a needle cylinder. Pile loops can be formed on optional wales by the reciprocating turning operation of the needle cylinder regardless of the needle loop forming operations of the needles.

### SUMMARY OF THE INVENTION

It is an object of the present invention provide a sock providing for an improved wearing comfort.

This object is achieved by a sock according to claim 1.

According to the present invention, a knitted fabric including different pile lengths is provided in which a pile motif is formed by a knitting machine capable of forming a plurality of knitting structures of ground yarn and pile yarn in a same course by selectively moving sinkers in and out of between reciprocating knitting needles. The plurality of knitting structures include a first knitting structure defining one of a basic knitting structure and a varied knitting structure; a second knitting structure in which a sinker-loop length of the pile yarn is longer than a sinker-loop length of the ground yarn; and a third knitting structure in which the sinker-loop length of the pile yarn is longer than in the second knitting structure. The pile motif is formed by selectively arranging in a toe portion of the sock the second knitting structure and the third knitting structure on a stitch-by-stitch basis in a region of the first knitting structure in a same course, or by selectively arranging in a toe portion of the sock the third knitting structure on a stitch-by-stitch basis in a region of the second knitting structure in the same course.

The basic knitting structure according to a preferred embodiment of the present application preferably includes a plain stitch in which the sinker-loop lengths of the ground yarn and the pile yarn are substantially the same as each other, and the like. The varied knitting structure in a preferred embodiment of the present invention preferably includes a float stitch in which the pile yarn is not knitted but remains floated, a tuck stitch formed by, while a formed stitch is kept caught by a needle, knitting two or more stitches in together, a cut-boss stitch in which the float stitch is applied and a pattern is formed by inserting color yarn from a separate yarn guide, and the like.

The knitted fabric including different pile lengths according to a preferred embodiment of the present invention can preferably be formed by a circular knitting machine capable of forming a plurality of knitting structures of ground yarn and pile yarn in the same course by moving a pair of sinkers including a first pile sinker and a second pile sinker in and out of between reciprocating knitting needles, for example.

According to a control process for forming knitting structures by selectively driving the sinkers in the circular knitting machine, the difference between the knitting structures, i.e., the sinker-loop lengths correspond to the distance from a contact point between the pile yarn and the ground yarn and the sinker and a contact point between the pile yarn and the ground yarn and the knitting needle. Therefore, selecting which one of the sinkers is used to hold the pile yarn and the ground yarn and/or which one of the nibs is used by selecting whether the sinker is to be moved forward or backward enables the knitting structures including different sinker-loop (pile) lengths (i.e., the first to third knitting structures) to be knitted. For example, all of the first knitting control process in which both the first and second sinkers are not moved forward, the second knitting control process in which one of the sinkers, i.e., the first sinker is moved, and the third knitting control process in which the other sinker, i.e., the second sinker is moved, are selectively carried out by an actuator. Thus, a knitted fabric in which stitches of different knitting structures are distributed on a stitch-by-stitch basis can be provided.

By selectively arranging, in the same course, the second knitting structure and the third knitting structure on a stitch-by-stitch basis in a region of the first knitting structure or by selectively arranging, in the same course, the third knitting structure on a stitch-by-stitch basis in a region of the second knitting structure, a fine pile motif can be drawn on one surface of a knit product and therefore a three-dimensional effect can be presented.

The above knitted fabric may include a forward-rotation region formed by forward rotation of the cylinder of the circular knitting machine and a reciprocating rotation region formed by reciprocating rotation of the cylinder, and the pile motif may be arranged to extend across the forward-rotation region and the reciprocating-rotation region.

Please note that the term "cylinder" refers to a substantially tubular component of the circular knitting machine which accommodates the knitting needles therein. By rotation of this cylinder around a vertically extending center line thereof as a rotation axis, the knitting needles move vertically to form a knitted fabric.

The term "forward rotation" refers to counterclockwise rotation of the cylinder when the circular knitting machine is seen from above in the vertical direction of the cylinder, and the term "reverse rotation" refers to clockwise rotation of the cylinder. In addition, the term "reciprocating rotation" refers to the movement of the cylinder in which, while forward rotation of one revolution and reverse rotation of one revolution are alternately repeated, knitting is performed only by the knitting needles for the semicircle of the cylinder.

Due to this, in the knitted fabric including different pile lengths, it is possible to form a complicated pile motif in which stitches of different knitting structures are distributed on a stitch-by-stitch basis even in a portion knitted by reciprocating rotation, e.g., a heel portion or a toe portion of a sock. Consequently, a three-dimensional appearance can be given to any portion of a knit product, and therefore knitted fabric with different pile lengths can be provided which can give more improved fashionability and functionality.

The above-described knitted fabric may include a forward-rotation region formed by forward-rotation of the cylinder of the circular knitting machine and a reciprocating-rotation region formed by reciprocating rotation of the cylinder, and the pile motif may be arranged to extend across the forward-rotation region and the reciprocating rotation region.

In this case, in the knitted fabric including different pile lengths, it is possible to form a complicated pile motif in which stitches of different knitting structures are distributed on a stitch-by-stitch basis continuously from a portion next to the reciprocating-rotation region such as a heel or a top of a sock to that reciprocating-rotation region. Consequently, it is possible to give a three-dimensional appearance to any portion of a knit product and therefore to provide the knitted fabric including different pile lengths which can provide more improved fashionability and functionality.

The above-described knitted fabric including different pile lengths can be applied to a knit product. Also, the above-described knitted fabric can be applied to a sock. For example, by applying the aforementioned knitted fabric including the different pile lengths to a knit product such as a sock, a leg portion and a foot portion which are important to enhance fashionability can made fashionable or stylish in a suitable way and the functionality such as wearing comfort can be improved. Especially, when a three-dimensional appearance is provided to the sock by providing a complicated pile motif in a toe portion and a heel portion of the sock which are formed by reciprocating rotation so that the pile motif continuously extends from a region other than the toe portion or the heel portion to the toe portion or the heel portion, highly enhanced fashion can be presented not only when a person wearing such socks goes out with shoes but also in a room where the shoes are taken off. In addition, it is possible to provide improved functionality such as wearing comfort even to a portion in which the functionality could not be improved in accordance with a conventional technique.

In the above-described knit product, at least one of the first knitting structure, the second knitting structure, and the third knitting structure may be selectively arranged in accordance with a distance between the selected knitting structure and skin when the knit product is worn.

In this case, when the knit product is applied to a leg wear, for example, the first knitting structure provided at a portion which is closer to the skin when the leg wear is worn, and the second knitting structure and/or the third knitting structure in which the sinker-loop length of the pile yarn is longer than that of the ground yarn can be provided at a portion which is farther from the skin. Thus, the distance between the skin and the knitting structure can be reduced even in a portion that is spaced away from the skin when the knit product is worn in accordance with a conventional technique. Therefore, wearing comfort can be improved.

In the above-described knit product, at least one of the first knitting structure, the second knitting structure, and the third knitting structure may be selectively arranged in accordance with a magnitude of a load applied thereto when the knit product is worn.

In this case, when this knit product is applied to a leg wear, for example, the second knitting structure and/or the third knitting structure in which the sinker-loop length of the pile yarn is longer than that of the ground yarn can be applied to a portion to which a relatively large load is applied when the leg wear is worn. Thus, the portion subjected to the load can be made thicker. Therefore, the impact applied during walking or running can be significantly reduced.

In the above-described knit product, a gore line may be defined by the second knitting structure or the third knitting structure.

The term "gore line" refers to a boundary of portions where stitch decrease and stitch increase are performed, respectively, during reciprocating rotation of the cylinder of the circular knitting machine. For example, a pocket-shaped portion such as a heel and a toe of a sock are knitted by reciprocating rotation of the cylinder of the circular knitting machine with decreasing and increasing needles in the needles for the semicircular of the circular knitting machine.

In this case, because the second knitting structure or the third knitting structure is preferably arranged at the gore line, the pile yarn can stretch. Therefore, a stretching feeling at the gore line can be eased.

According to preferred embodiments of the present invention, a fine pile motif can be provided on one surface of a knit product, thereby giving a three-dimensional effect.

The above and other elements, features, steps, characteristics and advantages of the present invention will become more apparent from the following detailed description of the preferred embodiments with reference to the attached drawings.

### BRIEF DESCRIPTION OF THE DRAWINGS

Fig. 1 is an enlarged view of multi-pile knitted fabric according to a first preferred embodiment of the present invention.
Fig. 2 is a side view of a sock including the multi-pile knitted fabric according to the first preferred embodiment of the present invention.
Fig. 3 shows an arrangement of knitting structures in a portion of the sock of Fig. 2.
Fig. 4 shows a low-pile sinker and a high-pile sinker opposed to each other in an exemplary circular knitting machine for forming the multi-pile knitted fabric of the first preferred embodiment of the present invention, explaining a difference of a nib position between the low-pile sinker and the high-pile sinker.
Figs. 5A, 5B, and 5C show how to hold pile yarn and ground yarn in cases of forming a plain stitch, a low-pile stitch, and a high-pile stitch, respectively.
Fig. 6 is a developed view of a toe portion of a sock according to a second preferred embodiment of the present invention.
Fig. 7 is a developed view of a toe portion of a sock according to a third preferred embodiment of the present invention.
Fig. 8 is a developed view of a sock of a fourth preferred embodiment of the present invention.
Fig. 9 is a perspective view a Japanese sock according to a fifth preferred embodiment of the present invention.

### DETAILED DESCRIPTION OF THE PREFERRED EMBODIMENTS

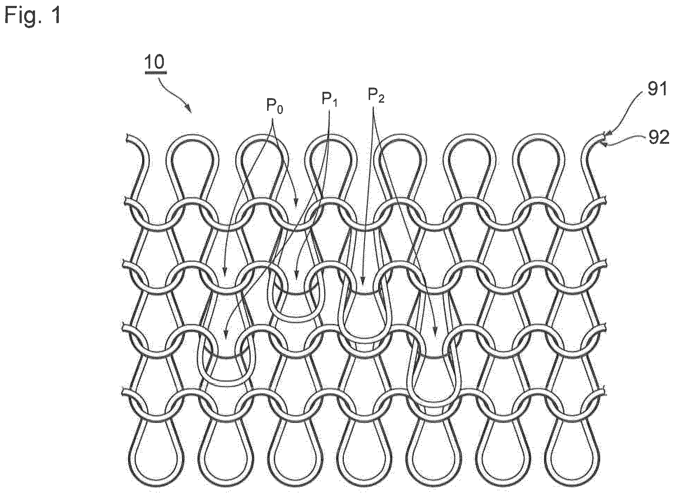

Hereinafter, preferred embodiments of the present invention are described, referring to Figs. 1 through 9 in which the same reference signs refer to the same or equivalent elements. Please note that the dimension ratio is not coincident with that in the description. In the description, the term describing the direction such as "upper", "lower" or the like is used for convenience based on the state shown in the drawings.

### First Preferred Embodiment

Fig. 1 is an enlarged view of a portion of a multi-pile knitted fabric (in which a pile length is varied) according to the first preferred embodiment of the present invention and shows stitches therein. The portion shown in Fig. 1 includes a plain stitch (first knitting structure) P₀ in which both pile yarn 91 and ground yarn 92 are knitted together and a sinker-loop length of the pile yarn 91 is the same as that of the ground yarn 92; a low-pile stitch (second knitting structure) P₁ in which the sinker-loop length of the pile yarn 91 is longer than that of the ground yarn 92; and a high-pile stitch (third knitting structure) P₂ in which the sinker-loop length of the pile yarn 91 is longer than that in the low-pile stitch P₁. The low-pile stitch P₁ is also referred to as a short-pile stitch and the high-pile stitch P₂ is also referred to as a long-pile stitch.

The multi-pile knitted fabric 10 can include a pile motif formed by selectively arranging the low-pile stitch P₁ and the high-pile stitch P₂ on a stitch-by-stitch basis in a portion of the plain stitches P₀ in the same course by using a circular knitting machine, or by selectively arranging the high-pile stitch P₂ on a stitch-by-stitch basis in a portion of the low-pile stitches P₁ in the same course. Thus, a fine pile motif can be provided on one surface of a knit product and it is therefore possible to give a three-dimensional appearance to the knit product. Please note that in the multi-pile knitted fabric 10 of Fig. 1 a row of stitches refers to "a course" and the horizontal direction refers to "a course direction" or "circumferential direction".

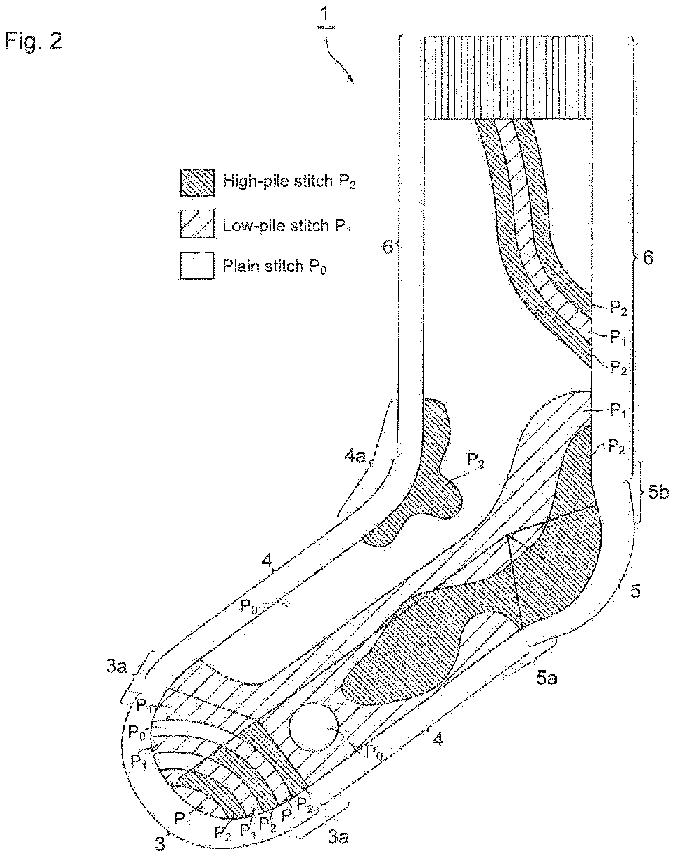

A sock (i.e., an exemplary knit product) made of the multi-pile knitted fabric 10 (shown in Fig. 1) according to the first preferred embodiment of the present invention will now be described. Fig. 2 is a side view of the sock made of the multi-pile knitted fabric 10 according to the first preferred embodiment of the present invention. As shown in Fig. 2, the sock 1 includes a toe portion 3 for covering a toe, a foot portion 4 continuously formed with the toe portion 3 to cover an instep and an arch, a heel portion 5 continuously formed with the foot portion 4 for covering a heel, and a leg portion 6 continuously formed with the heel portion 5 for covering an ankle and a calf.

In the sock 1, the heel portion 5 to which a load is applied is defined by high-pile stitches P₂, and a portion of the foot portion 4 provided to cover an instep and the leg portion 6 both of which are subjected to a relatively small load applied thereto are defined by plain stitches P₀. The sole of the toe portion 3 is defined by high-pile stitches P₂ and low-pile stitches P₁, while the top portion of the toe portion 3 is defined by low-pile stitches P₁ and plain stitches P₀. A boundary portion 4a which is positioned around a boundary between the leg portion 6 and the instep portion of the foot portion 4 is defined by high-pile stitches P₂. The leg portion 6 other than the boundary portion 4a is defined by plain stitches P₀, low-pile stitches P₁, and high-pile stitches P₂, and more particularly, in a portion of the plain stitches P₀ the low-pile stitches P₁ and the high-pile stitches P₂ are arranged to extend obliquely downward as shown in Fig. 2.

The multi-pile knitted fabric 10 includes a forward-rotation portion formed by forward rotation of a cylinder of a circular knitting machine and a reciprocating-rotation portion formed by reciprocating rotation of the cylinder. In the sock 1 shown in Fig. 2, the foot portion 4 and the leg portion 6 are the forward-rotation portion, while the toe portion 3 and the heel portion 5 are the reciprocating-rotation portion.

In the sock 1 of this preferred embodiment, the heel portion 5 as the reciprocating-rotation portion is formed by selectively arranging the low-pile stitch P₁ and the high-pile stitch P₂ on a stitch-by-stitch basis. A portion 5a around a boundary between the heel portion 5 as the reciprocating-rotation portion and the foot portion 4 as the forward-rotation portion and a portion 5b around a boundary between the heel portion 5 and the leg portion 6 are formed by selectively arranging the low-pile stitch P₁ and the high-pile stitch P₂ on a stitch-by-stitch basis.

Moreover, the toe portion 3 as the reciprocating-rotation portion is formed by selectively arranging the low-pile stitch P₁ and the high-pile stitch P₂ on a stitch-by-stitch basis. A portion 3a around a boundary between the toe portion 3 and the foot portion 4 as the forward-rotation portion is formed by selectively arranging the low-pile stitch P₁ and the high-pile stitch P₂ on a stitch-by-stitch basis.

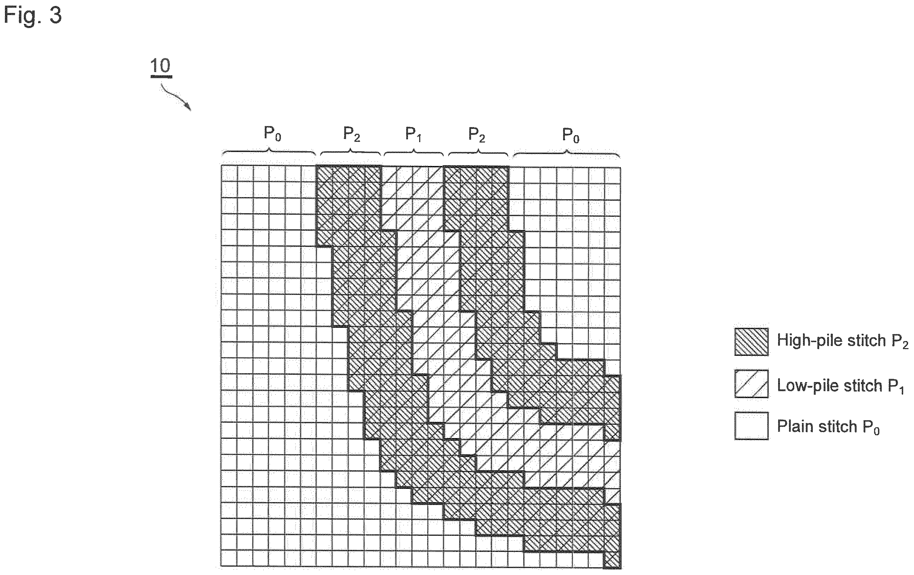

Fig. 3 is a diagram showing an arrangement of the stitches in the multi-pile knitted fabric used for the sock shown in Fig. 2. As shown in Fig. 3, in the multi-pile knitted fabric 10, the plain stitch P₀, the low-pile stitch P₁, and the high-pile stitch P₂ are arranged on a stitch-by-stitch basis in one course extending in the course direction (i.e., the horizontal direction in Fig. 3). This arrangement enables a complicated pile motif to be drawn. Moreover, this arrangement also enables smooth formation of a pile motif which includes the low-pile stitches P₁ and the high-pile stitches P₂ extending obliquely downward, in the portion of plain stitches P₀, as shown in Fig. 2.

In the sock 1 of this preferred embodiment, the low-pile stitch P₁ and the high-pile stitch P₂ preferably are selectively arranged on a stitch-by-stitch basis in the portion of plain stitches P₀ (as in the heel portion 5, for example) in the same course. Also, the high-pile stitch P₂ is selectively arranged on a stitch-by-stitch basis in the portion of low-pile stitch P₁ (as in the foot portion 4 and the leg portion 6, for example) in the same course. Thus, a fine pile motif can be formed on the surface of the sock 1 and a three-dimensional appearance can be provided to the sock 1.

In addition, the sock 1 of this preferred embodiment can provide a cushioning effect depending on the magnitude of the load applied to the knitting structure when the sock 1 is worn.

Moreover, in the toe portion 3 of the sock 1 of this preferred embodiment, strips of the low-pile stitches P₁ and strips of the plain stitches P₀ are alternately arranged and strips of the high-pile stitches P₂ and other strips of the low-pile stitches P₁ are alternately arranged, as shown in Fig. 2. Therefore, the landing pressure applied to the toe portion 3 can be distributed without making the entire toe portion 3 thicker so that breathability of the sock 1 is ensured. Also, in the foot portion 4 of the sock 1 of this preferred embodiment, a round portion of the plain stitches P0 is arranged to correspond to a thenar eminence. Therefore, when a person wearing this sock 1 steps on the ground or an object, the person can easily get a feeling or impact from the ground or an object under his/her foot. In addition, high-pile stitches P₂ are arranged at and around the boundary between the foot portion 4 and the leg portion 6 in the sock 1 of this preferred embodiment. Therefore, a load applied to this portion by contact with an upper edge of a shoe can be reduced. Furthermore, the sock 1 of this preferred embodiment includes at least one strip of high-pile stitches P₂ and at least one strip of low-pile stitches P₁ extending obliquely downward in the leg portion 6. The strips can support human muscles and provide a massage effect.

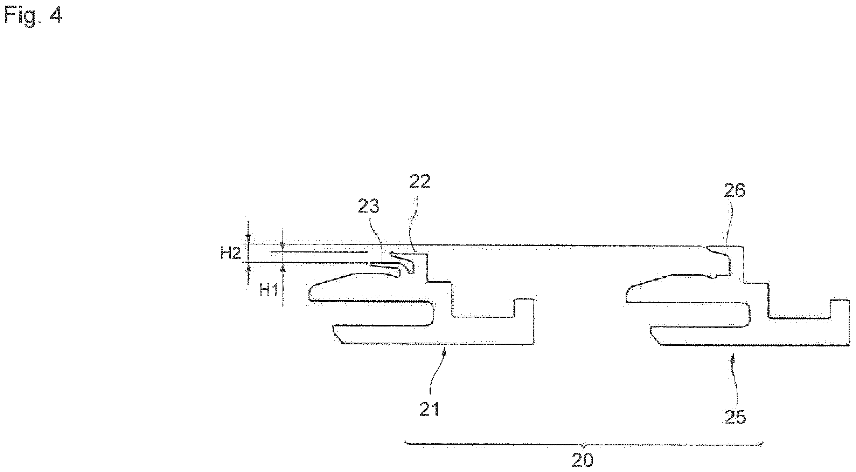

Next, an exemplary method for forming the multi-pile knitted fabric according to the first preferred embodiment of the present invention is described. A circular knitting machine for forming the multi-pile knitted fabric of this preferred embodiment is arranged to form a plurality of types of knitting structures by selectively moving a pair of sinkers in and out of between knitting needles which are reciprocating. Fig. 4 shows an exemplary circular knitting machine for forming the multi-pile knitted fabric of this preferred embodiment and illustrates a difference of a nib position between a low-pile sinker and a high-pile sinker opposed to each other.

The multi-pile knitted fabric 10 of this preferred embodiment is formed by the circular knitting machine including a pair of sinkers 20. The pair of sinkers 20 includes a low-pile sinker 21 and a high-pile sinker 25. The low-pile sinker 21 includes a low-pile nib 22 arranged to hold pile yarn 91 when a low-pile stitch P₁ is formed and a small nib 23 arranged to hold ground yarn 92. The high-pile sinker 25 is arranged to have a high-pile nib 26 that holds pile yarn 91 when a high-pile stitch P₂ is formed. The low-pile nib 22 and the small nib 23 provided in the low-pile sinker 21 and the high-pile nib 26 provided in the high-pile sinker 25 are different in a vertical position, as shown in Fig. 4, and the distance H2 between the small nib 23 and the high-pile nib 26 in the vertical direction is longer than the distance H1 between the small nib 23 and the low-pile nib 22. Due to this distance difference (level difference), the circular knitting machine in this preferred embodiment can form different knitting structures including different sinker-loop lengths.

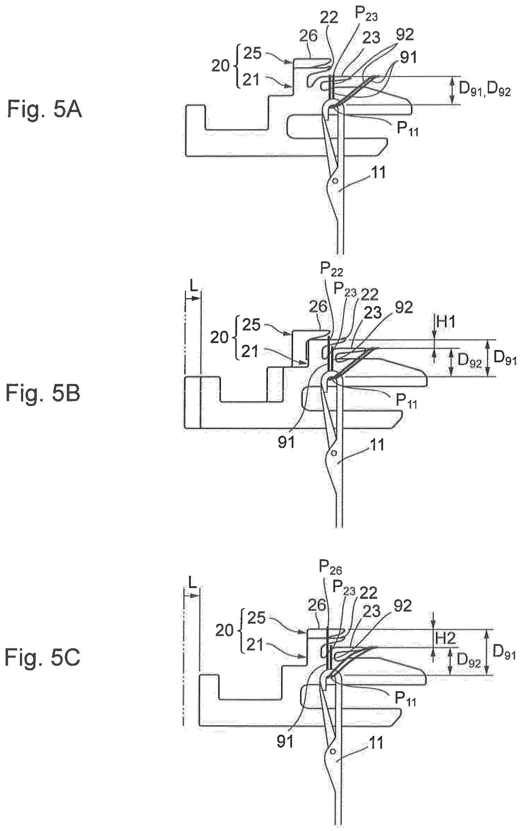

Figs. 5A, 5B, and 5C are side views of the sinkers 20, which show how pile yarn and ground yarn are held in the circular knitting machine when a plain stitch, a low-pile stitch, and a high-pile stitch are formed, respectively. Referring to Figs. 5A, 5B, and 5C, when stitches are formed, sinker-loop lengths thereof are decided in accordance with distances from contact points P₂₂, P₂₃, and P₂₆ between the pile yarn 91 and the ground yarn 92 and the nibs 22, 23, and 26 to a contact point P₁₁ between the pile yarn 91 and the ground yarn 92 and a knitting needle 11. More specifically, the type of the knitting structure can be changed depending on which one of the nibs (i.e., the low-pile nib 22, the small nib 23, and the high-pile nib 26) holds the pile yarn 91 and the ground yarn 92 when the knitting needle 11 is drawing the pile yarn 91 and the ground yarn 92 into an old loop. The nib for holding the pile yarn 91 and the ground yarn 92 can be selected by selectively moving the low-pile sinker 21 and the high-pile sinker 25 forward, as shown in Figs. 5A, 5B, and 5C.

Fig. 5A shows a case where the both the low-pile sinker 21 and the high-pile sinker 25 are not moved from predetermined positions with respect to the knitting needle 11, that is, not moved forward. In this case, both the pile yarn 91 and the ground yarn 92 are held by the small nib 23 of the low-pile sinker 21. In this state, the distance D₉₁ from the contact point P₂₃ between the pile yarn 91 and the small nib 23 to the contact point P₁₁ between the pile yarn 91 and the knitting needle 11 is equal to the distance D₉₂ from the contact point P₂₃ between the ground yarn 92 and the small nib 23 to the contact point P₁₁ between the ground yarn 92 and the knitting needle 11. Therefore, when the knitting needle 11 draws the pile yarn 91 and the ground yarn 92 into an old loop in the state shown in Fig. 5A, a plain stitch P₀ in which the sinker-loop length of the pile yarn 91 is the same as that of the ground yarn 92 is formed.

Fig. 5B shows a case where only the low-pile sinker 21 is moved from the predetermined position with respect to the knitting needle 11 toward the knitting needle 11 by a distance L (i.e., only the low-pile sinker 21 is moved forward) . In this case, the pile yarn 91 is held by the low-pile nib 22 of the low-pile sinker 21 and the ground yarn 92 is held by the small nib 23 of the low-pile sinker 21. In this state, the distance D₉₁ from the contact point P₂₂ between the pile yarn 91 and the low-pile nib 22 to the contact point P₁₁ between the pile yarn 91 and the knitting needle 11 is different from the distance D₉₂ from the contact point P₂₃ between the ground yarn 92 and the small nib 23 to the contact point P₁₁ between the ground yarn 92 and the knitting needle 11 by a distance H1. Therefore, when the knitting needle 11 draws the pile yarn 91 and the ground yarn 92 into an old loop in the state of Fig. 5B, a low-pile stitch P₁ in which the sinker-loop length of the pile yarn 91 is longer than that of the ground yarn 92 is formed. The sinker-loop length of the pile yarn 91 is twice the distance H1, for example.

Fig. 5C shows a case where both the low-pile sinker 21 and the high-pile sinker 25 are moved from the predetermined positions with respect to the knitting needle 11 toward the knitting needle 11 by the distance L (i.e., the both the sinkers 21 and 25 are moved forward). In this case, the pile yarn 91 is held by the high-pile nib 26 of the high-pile sinker 25 and the ground yarn 92 is held by the small nib 23 of the low-pile sinker 21. In this case, the distance D₉₁ from the contact point P₂₆ between the pile yarn 91 and the high-pile nib 26 to the contact point P₁₁ between the pile yarn 91 and the knitting needle 11 is different from the distance D₉₂ from the contact point P₂₂ between the ground yarn 92 and the small nib 23 to the contact point P₁₁ between the ground yarn 92 and the knitting needle 91 by a distance H2 which is longer than the distance H1 in this example. Therefore, when the knitting needle 11 draws the pile yarn 91 and the ground yarn 92 into an old loop in the state of Fig. 5C, a high-pile stitch P₂ is formed in which the sinker-loop length of the pile yarn 91 is longer than that of the ground yarn 92 and is twice the distance H2, for example.

According to the multi-pile knitted fabric 10 of this preferred embodiment, it is possible that the low-pile stitch P₁ and the high-pile stitch P2 are selectively arranged on a stitch-by-stitch basis in the same course in a portion of the plain stitches P₀ and the high-pile stitch P₂ is selectively arranged on a stitch-by-stitch basis in the same course in a portion of the low-pile stitches P₁. Therefore, a fine pile motif can be drawn and formed on the surface of the sock 1, thus providing a three-dimensional appearance.

Moreover, the sock 1 including the above multi-pile knitted fabric 10 can make the leg portion and the foot portion, which have an important role to improve the fashionability, more fashionable in a suitable manner and can enhance functions, e.g., wearing comfort. Especially, a complicated pile motif is formed in the toe portion 3 and the heel portion 5 which are formed by reciprocating rotation or is formed continuously with another portion than the toe portion 3 and the heel portion 5, thereby providing a three-dimensional appearance. High fashionability can be presented both outside where shoes are worn on the socks and indoors where the shoes are taken off.

In the multi-pile knitted fabric 10 described above, the low-pile stitch P₁ and the high-pile stitch P₂ can be selectively arranged on a stitch-by-stitch basis. It is therefore possible to arrange at least one of the low-pile stitch P₁ and the high-pile stitch P2 at a desired location only. This enables yarn to be saved while the multi-pile knitted fabric 10 is manufactured. Thus, a manufacturing cost of socks, Japanese socks or the like which use this multi-pile knitted fabric 10 can be reduced.

The sock 1 including the multi-pile knitted fabric 10 according to the first preferred embodiment of the present invention, which can provide the aforementioned advantageous effects, is described above. Socks 1A to 1C and a Japanese sock 1D according to the second to fifth preferred embodiments of the present invention which will be described later can also provide the aforementioned advantageous effects and additional effects in terms of functionality. Next, the second to fifth preferred embodiments of the present invention will be described.

### Second Preferred Embodiment

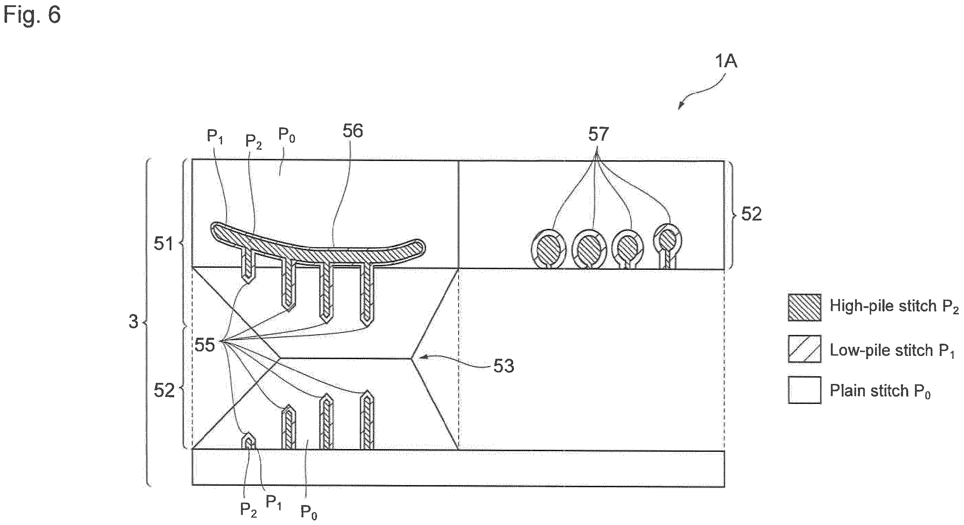

A sock (knit product) 1A according to the second preferred embodiment of the present invention will now be described. Fig. 6 is a developed view of a toe portion of the sock 1A according to the second preferred embodiment. The legend symbols refer to types of knitting structures. Referring to Fig. 6, a region 51 corresponds to a sole-side portion when this sock is worn, a region 52 corresponds to an instep-side portion when this sock is worn, and a boundary 53 between the regions 51 and 52 corresponds to a toe portion when this sock is worn.

The sock 1A includes the multi-pile knitted fabric (knitted fabric with different pile lengths) 10 described in the first preferred embodiment in which a pile motif is formed preferably by selectively arranging in the same course a low-pile stitch (second knitting structure) P₁ and the high-pile stitch (third knitting structure) P₂ on a stitch-by-stitch basis in a region of plain stitches (first knitting structure) P₀, or by selectively arranging in the same course the high-pile stich P₂ on a stitch-by-stitch basis in a region of low-pile stitches P₁. The pile motif is formed in a reciprocating-rotation portion knitted by reciprocating rotation of a cylinder of a circular knitting machine and in a portion extending across the reciprocating-rotation region and a forward-rotation region knitted by forward rotation of the cylinder.

Any of the first, second, and third knitting structures, i.e., the plain stitch P₀, the low-pile stitch P₁, and the high-pile stitch P₂, is selected in accordance with a distance between the knitting structure and skin of a person when the person wears the sock 1A. More specifically, in the sock 1A having the rounded toe, the low-pile stitches P₁ and the high-pile stitches P₂ are arranged in portions where the knitting structure is far from the skin, i.e., portions 55 corresponding to spaces between toes, a portion 56 of the sole portion corresponding to bases of the toes, and portions 57 of the instep portion corresponding to the bases of the toes when someone wears this sock 1A, for example. Moreover, in a region where the distance between the knitting structure and the skin is larger, the pile stitches P₂ having a longer sinker-loop length of pile yarn 91 are arranged.

The sock 1A of this preferred embodiment includes the multi-pile knitted fabric 10 which allows the aforementioned knitting structures to be distributed on a stitch-by-stitch basis. Thus it is possible to arrange the low-pile stitches P₁ and the high-pile stitches P₂ precisely in the portions 55 corresponding to the spaces between the toes, the portion 56 corresponding to the bases of the toes on the sole side, and the portions 57 corresponding to the bases of the toes on the instep side when the sock 1A is worn. This arrangement enables the sock 1A to provide enhanced wearing comfort between the toes and provide the feeling similar to that provided by a five-toe sock.

### Third Preferred Embodiment

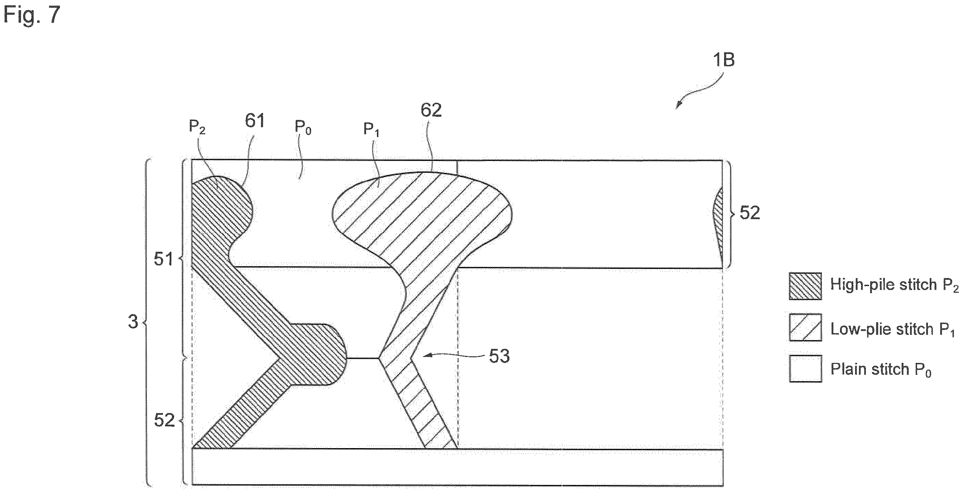

A sock (knit product) 1B according to the third preferred embodiment of the present invention is now described. Fig. 7 is a developed view of a toe portion of the sock according to the third preferred embodiment of the present invention. In Fig. 7, the legend symbols refer to types of knitting structures. As in the example of Fig. 6, the region 51 corresponds to a portion adjacent to a foot-sole of a person when the person wears the sock, the region 52 corresponds to a portion adjacent to an insole, and the boundary 53 between the regions 51 and 52 corresponds to a portion adjacent to a toe.

The sock 1B includes the aforementioned multi-pile knitted fabric (knitted fabric with different pile lengths) 10 as in the second preferred embodiment. A pile motif is formed in a reciprocating-rotation portion knitted preferably by reciprocating rotation of a cylinder of a circular knitting machine and in a portion extending across the reciprocating-rotation portion and a forward-rotation portion knitted by forward rotation of the cylinder. In the sock 1B, based on the magnitude of the load applied thereto when the sock 1B is worn, at least one of the first, second, and third knitting structures, i.e., the plain stitch P₀, the low-pile stitch P₁, and the high-pile stitch P₂ is selected so that the respective portions of the sock 1B have an appropriate thickness. For example, in a portion arranged next to a toe when the sock 1B is worn, the low-pile stitches P₁ and the high-pile stitches P₂ are arranged at positions to which a load is easily applied. Moreover, at a position to which a larger load is applied, the knitting structure having a longer sinker-loop length of the pile yarn 91 is arranged.

The sock 1B includes the multi-pile knitted fabric 10 which allows the aforementioned knitting structures to be distributed on a stitch-by-stitch basis. Thus, the low-pile stitch P₁ and the high-pile stitch P₂ can be precisely arranged at locations to which a load is applied. In addition, by arranging the low-pile stitch P₁ and the high-pile stitch P₂ in this manner, the thickness of that portion is increased. Thus, damage applied to a foot of a person wearing the sock 1B in the toe portion can be significantly reduced.

The portion to which a load is applied is varied depending on what sports the person wearing the sock 1B plays. For example, in a case where a person wears the sock 1B in sports such as basketball, a laterally applied load is larger. In this case, the low-pile stitches P₁ and the high-pile stitches P₂ are arranged in foot-side regions 61 and 62 of the toe portion 3, as shown in Fig. 7. This arrangement can significantly reduce an impact applied to the foot of the person. Moreover, in a case where the high-pile stitches P₂ are arranged in the outer region 61 near a little toe or the fifth toe to make this portion thicker, the impact applied to the person' s foot can be reduced more effectively.

### Fourth Preferred Embodiment

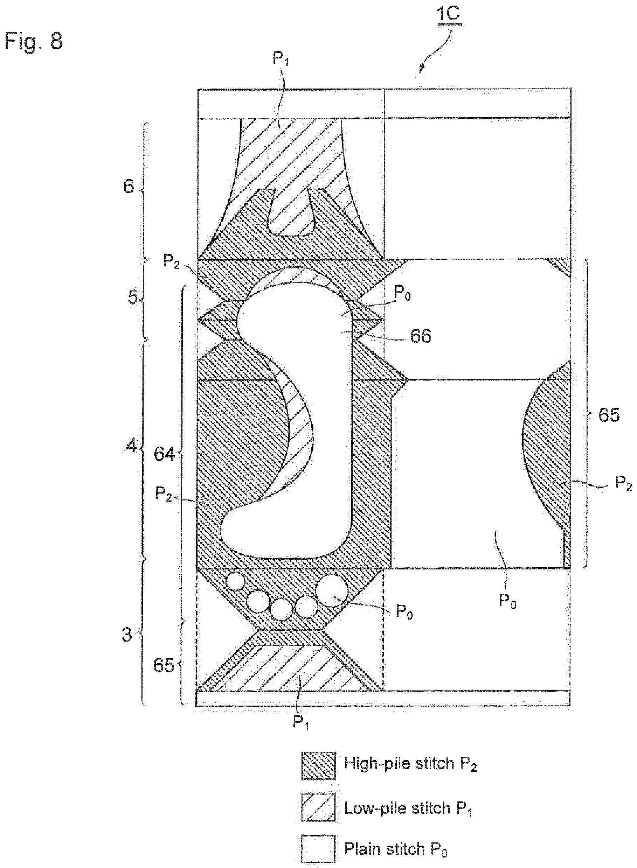

A sock (knit product) 1C according to the fourth preferred embodiment of the present invention will now be described. Fig. 8 is a developed view of the sock 1C according to the fourth preferred embodiment of the present invention. In Fig. 8, the legend symbols refer to the types of knitting structures, a region 64 corresponds to a sole portion when a person wears the sock 1C, and a region 65 corresponds to an instep portion.

The sock 1C includes the aforementioned multi-pile knitted fabric (knitted fabric with different pile lengths) 10 as in the second and third preferred embodiments. The pile motif in this example is preferably formed in a reciprocating-rotation region knitted by reciprocating rotation of a cylinder of a circular knitting machine and in a region extending across the reciprocating-rotation region and a forward-rotation region knitted by forward rotation of the cylinder. In the sock 1C, any of the first, second, and third knitting structures, i.e., the plain stitch P₀, the low-pile stitch P₁, and the high-pile stitch P₂, is selected based on the distance between the knitting structure and the person's skin when the sock 1C is worn. More specifically, in the sole portion of the sock 1C, the plain stitches P₀ are arranged in a region 66 where the knitting structure is to be contact with the person's skin, and the low-pile stitches P₁ and the high-pile stitches P₂ are arranged around the region 66, for example. Moreover, in a region where the distance between the knitting structure and the person's skin is larger, the high-pile stitches P₂ having a longer sinker-loop length of pile yarn 91 are arranged.

The sock 1C of this preferred embodiment includes the multi-pile knitted fabric 10 which allows the aforementioned knitting structures to be distributed on a stitch-by-stitch basis. Thus, it is possible to precisely arrange the plain stitches P₀ in the region 66 where the knitting structure is to be in contact with the person's skin. It is also possible to precisely arrange the low-pile stitches P₁ and the high-pile stitches P₂ in a region surrounding the region 66 based on the distance from the person's skin when the person wears the sock 1C. The knitting structure arranged in the region 66 and that arranged in the surrounding region are different in the sinker-loop length of the pile yarn 91. Therefore, the thickness of the multi-pile knitted fabric is different. Since the multi-pile knitted fabric is thicker in the region around the region 66 than in the region 66, the region 66 is formed to be concave.

The concave portion of the sock 1C of this preferred embodiment is preferably filled with any of silicone resin, acrylic resin, and vinyl chloride resin, for example. Due to this filling, an anti-slip effect can be provided between the skin and the resin when weight is applied, improving foot comfort. In other words, it is possible to precisely form the concave portion at a location to be filled with the resin, i.e., in the region to be in contact with the skin.

### Fifth Preferred Embodiment

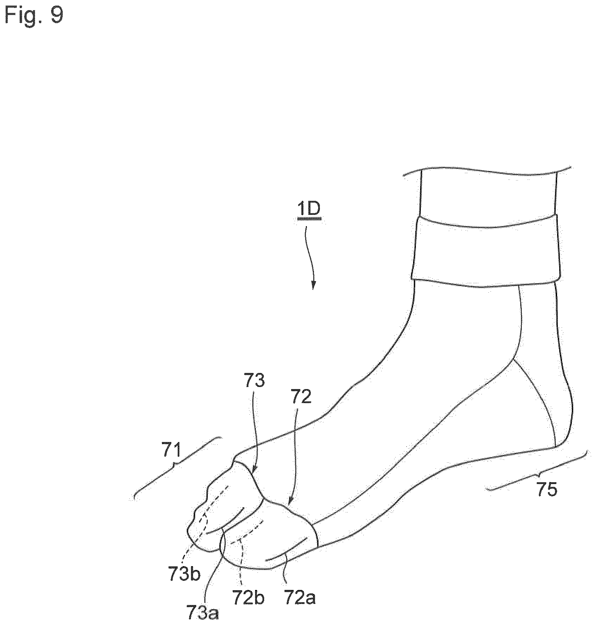

A Japanese sock (knit product) 1D according to the fifth preferred embodiment of the present invention will now be described. Fig. 9 is a perspective view of the Japanese sock 1D of this preferred embodiment. The Japanese sock 1D includes in a toe portion 71 a pocket 72 that covers the first toe and another pocket 73 that covers other toes from the second toe to the little toe. In the Japanese sock 1D having the above arrangement, the pockets 72 and 73 of the toe portion 71 and a heel portion 75 are knitted preferably by reciprocating rotation of a cylinder of a circular knitting machine and are shaped by decreasing and increasing stitches by knitting needles for a semicircle of the circular knitting machine. The boundary between the narrowing and the widening is referred to as a gore line. In the example of Fig. 9, two gore lines 72a and 72b are preferably provided on both sides of the pocket 72, and two gore lines 73a and 73b are preferably provided on both sides of the pocket 73.

The sock 1D includes the aforementioned multi-pile knitted fabric (knitted fabric with different pile lengths) 10 as in the second, third, and fourth preferred embodiments. The pile motif in this example is formed in a reciprocating rotation region knitted by reciprocating rotation of the cylinder of the circular knitting machine and in a region extending across the reciprocating rotation region and a forward-rotation region knitted by forward rotation of the cylinder. In addition, selection of the low-pile stitch P₁ as the second knitting structure and the high-pile stitch P₂ as the third knitting structure is performed so that the gore lines 72a, 72b, 73a, and 73b in the sock 1D are defined by the low-pile stitch P₁ or high-pile stitch P₂.

The Japanese sock 1D of this preferred embodiment includes the multi-pile knitted fabric 10 which allows the aforementioned knitting structures to be distributed on a stitch-by-stitch basis even in the reciprocating rotation region. Due to this, it is possible to precisely arrange the low-pile stitch P1 or the high-pile stitch P2 in regions serving as the gore lines 72a, 72b, 73a, and 73b. Therefore, a stretched feeling at the gore lines can be reduced because of a stretch effect of the pile yarn 91.

The multi-pile knitted fabric described in the first to fifth preferred embodiments can be applied to various leg wears such as tights, Japanese socks, pantyhose, stockings, and supporters, and can be also applied to other knit products worn on other portions than the legs, such as gloves, for example, though not claimed.

In the second to fifth preferred embodiments, the socks 1A to 1C and the Japanese sock 1D are described as examples of a sock or a Japanese sock (knit product) including the multi-pile knitted fabric according to the present invention. However, the features described in the second to fifth preferred embodiments can be combined in an appropriate manner.

In the above preferred embodiments, the multi-pile knitted fabric preferably including the basic knitting structure, i.e., the plain stitch P₀ is described as an example. However, the present invention is not limited thereto. In place of the plain stitch P₀, a varied knitting structure, i.e., a float stitch, a tuck stitch, a cut-boss stitch can be applied, for example. Moreover, a pile motif can be drawn by selectively arranging the low-pile stitch (the second knitting structure) P₁ and the high-pile stitch (the third knitting structure) P₂ on a stitch-by-stitch basis in a region including only one of the knitting structures such as the plain stitch, the float stitch, the tuck stitch, and the cut-boss stitch, or a region including two or more of those knitting structures.

Furthermore, the knitted fabric with different pile lengths according to various preferred embodiments of the present invention can include reinforcing yarn in the knitting structure.

While preferred embodiments of the present invention have been described above, it is to be understood that variations and modifications will be apparent to those skilled in the art without departing from the scope of the present invention. The scope of the present invention, therefore, is to be determined solely by the following claims.

## Claims

1. A sock (1, 1A, 1B, 1C, 1D) including a knitted fabric (10); the knitted fabric (10) including different pile lengths in which a pile motif is formed by a knitting machine capable of forming a plurality of knitting structures of ground yarn (92) and pile yarn (91); wherein
the plurality of knitting structures include:
a first knitting structure (P₀) defining one of a basic knitting structure and a varied knitting structure;
a second knitting structure (P₁) in which a sinker-loop length of the pile yarn (91) is longer than a sinker-loop length of the ground yarn (92); and
a third knitting structure (P₂) in which the sinker-loop length of the pile yarn (91) is longer than in the second knitting structure (P₁) ;
**characterised in that** the pile motif is formed by selectively arranging in the toe portion (3, 71) of the sock (1, 1A, 1B, 1C, 1D) the second knitting structure (P₁) and the third knitting structure (P₂) on a stitch-by-stitch basis in a region of the first knitting structure (P₀) in a same course, or by selectively arranging in the toe portion (3, 71) of the sock (1, 1A, 1B, 1C, 1D) the third knitting structure (P₂) on a stitch-by-stitch basis in a region of the second knitting structure (P₁) in the same course.

2. The sock (1, 1A, 1B, 1C, 1D)
according to claim 1, wherein a forward-rotation region formed by forward rotation of a cylinder of the knitting machine and a reciprocating rotation region formed by reciprocating rotation of the cylinder are provided, and
the pile motif is arranged in the reciprocating rotation region.

3. The sock (1, 1A, 1B, 1C, 1D)
according to claim 1, wherein a forward-rotation region formed by forward rotation of a cylinder of the knitting machine and a reciprocating rotation region formed by reciprocating rotation of the cylinder are provided, and
the pile motif is arranged to extend across the forward-rotation region and the reciprocating rotation region.

4. A sock(1, 1A, 1B, 1C, 1D) according to claim 1, wherein at least one of the first knitting structure (P₀), the second knitting structure (P₁), and the third knitting structure (P₂) is selectively arranged in accordance with a magnitude of a load applied thereto when the sock (1, 1A, 1B, 1C, 1D) is worn.

5. The sock (1, 1A, 1B, 1C, 1D) according to claim 1, wherein a gore line (72a, 72b, 73a, 73b) is defined by at least one of the second knitting structure (P₁) and the third knitting structure (P₂).

## Patentansprüche

1. Eine Socke (1, 1A, 1B, 1C, 1D), die Maschenware (10) umfasst; wobei die Maschenware (10) unterschiedliche Florlängen umfasst, bei denen ein Flormotiv durch eine Strickmaschine gebildet wird, die in der Lage ist, eine Mehrzahl von Strickstrukturen aus Grundgarn (92) und Florgarn (91) zu bilden; wobei
die Mehrzahl von Strickstrukturen Folgende umfasst:
eine erste Strickstruktur (P₀), die entweder eine grundlegende Strickstruktur oder eine variierte Strickstruktur definiert;
eine zweite Strickstruktur (P₁), bei der eine Platinenmaschenlänge des Florgarns (91) länger ist als eine Platinenmaschenlänge des Grundgarns (92); und
eine dritte Strickstruktur (P₂), bei der die Platinenmaschenlänge des Florgarns (91) länger ist als bei der zweiten Strickstruktur (P₁);
**dadurch gekennzeichnet, dass** das Flormotiv gebildet wird, indem die zweite Strickstruktur (P₁) und die dritte Strickstruktur (P₂) in dem Zehenabschnitt (3, 71) der Socke (1, 1A, 1B, 1C, 1D) in einer Region der ersten Strickstruktur (P₀) in einem selben Durchgang Stich um Stich selektiv angeordnet wird oder indem die dritte Strickstruktur (P₂) in dem Zehenabschnitt (3, 71) der Socke (1, 1A, 1B, 1C, 1D) in einer Region der zweiten Strickstruktur (P₁) in demselben Durchgang Stich um Stich selektiv angeordnet wird.

2. Die Socke (1, 1A, 1B, 1C, 1D) gemäß Anspruch 1, bei der eine Vorwärtsdrehungsregion, die durch eine Vorwärtsdrehung eines Zylinders der Strickmaschine gebildet wird, und eine Wechseldrehungsregion, die durch eine Wechseldrehung des Zylinders gebildet wird, vorgesehen sind, und
das Flormotiv in der Wechseldrehungsregion angeordnet ist.

3. Die Socke (1, 1A, 1B, 1C, 1D) gemäß Anspruch 1, bei der eine Vorwärtsdrehungsregion, die durch eine Vorwärtsdrehung eines Zylinders der Strickmaschine gebildet wird, und eine Wechseldrehungsregion, die durch eine Wechseldrehung des Zylinders gebildet wird, vorgesehen sind, und
das Flormotiv in der Wechseldrehungsregion dahin gehend angeordnet, sich über die Vorwärtsdrehungsregion und die Wechseldrehungsregion hinweg zu erstrecken.

4. Eine Socke (1, 1A, 1B, 1C, 1D) gemäß Anspruch 1, bei der zumindest eine der ersten Strickstruktur (P₀), der zweiten Strickstruktur (P₁) und der dritten Strickstruktur (P₂) selektiv gemäß einem Betrag einer darauf ausgeübten Last angeordnet wird, wenn die Socke (1, 1A, 1B, 1C, 1D) getragen wird.

5. Die Socke (1, 1A, 1B, 1C, 1D) gemäß Anspruch 1, bei der eine Zwickellinie (72a, 72b, 73a, 73b) durch zumindest entweder die zweite Strickstruktur (P₁) und/oder die dritte Strickstruktur (P₂) definiert wird.

## Revendications

1. Chaussette (1, 1A, 1B, 1C, 1D) comportant un tissu tricoté (10); le tissu tricoté (10) comportant différentes longueurs de poil où un motif de poil est formé par une machine à tricoter à même de former une pluralité de structures de tricotage de fil de base (92) et de fil de poil (91); dans laquelle
la pluralité de structures de tricotage comporte:
une première structure de tricotage (P₀) définissant l'une parmi une structure de tricotage de base et une structure de tricotage variée;
une deuxième structure de tricotage (P₁) dans laquelle une longueur de boucle d'entre-maille du fil de poil (91) est plus longue qu'une longueur de boucle d'entre-maille du fil de base (92); et
une troisième structure de tricotage (P₂) dans laquelle la longueur de boucle d'entre-maille du fil de poil (91) est plus longue que dans la deuxième structure de tricotage (P₁);
**caractérisée par le fait que** le motif de poil est formé en disposant de manière sélective dans la partie d'orteil (3, 71) de la chaussette (1, 1A, 1B, 1C, 1D) la deuxième structure de tricotage (P₁) et la troisième structure de tricotage (P₂) point par point dans une région de la première structure de tricotage (P₀) dans un même passage, ou en disposant de manière sélective dans la partie d'orteil (3, 71) de la chaussette (1, 1A, 1B, 1C, 1D) la troisième structure de tricotage (P₂) point par point dans une région de la deuxième structure de tricotage (P₁) dans le même passage.

2. Chaussette (1, 1A, 1B, 1C, 1D) selon la revendication 1, dans laquelle sont prévues une région de rotation en avant formée par la rotation en avant d'un cylindre de la machine à tricoter et une région de rotation alternative formée par une rotation alternative du cylindre, et
le motif de poil est disposé dans la région de rotation alternative.

3. Chaussette (1, 1A, 1B, 1C, 1D) selon la revendication 1, dans laquelle sont prévues une région de rotation en avant formée par la rotation en avant d'un cylindre de la machine à tricoter et une région de rotation alternative formée par la rotation alternative du cylindre, et
le motif de poil est disposé de manière à s'étendre à travers la région de rotation en avant et la région de rotation alternative.

4. Chaussette (1, 1A, 1B, 1C, 1D) selon la revendication 1, dans laquelle
au moins l'une parmi la première structure de tricotage (P₀), la deuxième structure de tricotage (P₁) et la troisième structure de tricotage (P₂) est disposée de manière sélective selon une grandeur de charge y appliquée lorsque la chaussette (1, 1A, 1B, 1C, 1D) est portée.

5. Chaussette (1, 1A, 1B, 1C, 1D) selon la revendication 1, dans laquelle une ligne de nez (72a, 72b, 73a, 73b) est définie par au moins l'une de la deuxième structure de tricotage (P₁) et de la troisième structure de tricotage (P₂).
